# EUROPEAN PATENT SPECIFICATION

(11) **EP 4 549 312 B1**
(45) Date of publication and mention of the grant of the patent: **12.08.2026**
(21) Application number: 24210137.6
(22) Date of filing: 31.10.2024
(51) Int. Cl.: B64C 1/06, B29C 70/32, B29D 99/00, B29C 70/86, B29C 70/44, B29L 31/30, B29L 31/00

(54) **METHOD FOR THE MANUFACTURING OF A STIFFENED STRUCTURAL COMPONENT MADE OF COMPOSITE MATERIAL AND STRUCTURAL COMPONENT**
VERFAHREN ZUR HERSTELLUNG EINES VERSTEIFTEN STRUKTURBAUTEILS AUS VERBUNDWERKSTOFF UND STRUKTURBAUTEIL
PROCÉDÉ DE FABRICATION D'UN ÉLÉMENT DE CONSTRUCTION RIGIDIFIÉ EN MATÉRIAU COMPOSITE ET ÉLÉMENT DE CONSTRUCTION

(30) Priority: 03.11.2023 IT 202300023190
(43) Date of publication of application: 07.05.2025
(73) Proprietor: Leonardo S.p.a., 00195 Roma (IT)
(72) Inventor: GALLO, Nicola, 74023 GROTTAGLIE (TA) (IT); ANGELINO, Luca, 74023 GROTTAGLIE (TA) (IT); SERIO, Alessandro, 74023 GROTTAGLIE (TA) (IT); GAMBARDELLA, Pasquale, 74023 GROTTAGLIE (TA) (IT); CORVAGLIA, Stefano Giuseppe, 74023 GROTTAGLIE (TA) (IT)
(74) Representative: Studio Torta S.p.A.

(56) References cited:
- EP-B1- 2 989 001
- US-A1- 2023 219 307

## Description

### CROSS-REFERENCE TO RELATED APPLICATIONS

This patent application claims priority from Italian patent application no. 102023000023190 filed on November 3, 2023.

### TECHNICAL FIELD

The present invention relates to a method for manufacturing a stiffened structural component made of a composite material, in particular a stiffened structural component reinforced with stiffening stringers and ribs and, if necessary, with other composite stiffening structures (such as, for example, polymer foams or honeycomb structures known as *"honeycomb cores"* interposed between two layers of composite material).

More in particular, this description will make explicit reference to the manufacturing of the fuselage of an aircraft or to the manufacturing of a tank under pressure, without thereby lacking generality.

In general, the method according to the invention can be applied to all those closed composite parts, namely those parts defining an internal volume, which have narrow internal spaces and undercuts.

The present invention also relates to a stiffened structural component made of a composite material.

### STATE OF THE ART

Structural components are known, which are used in the aviation industry, for example fuselages and parts thereof, and are made of composite materials.

In the state of the art there are aeronautical structural components that are made of lights alloys, hence of metal materials, and will then build part of the fuselage of the aircraft.

As it is known, fuselages are designed to ensure an adequate protection of the payload (crew, passengers, goods, etc.), but, at the same time, they cannot exceed set weight limits.

Furthermore, the use of metal components, despite ensuring a greater resistance, leads to an increase in overall costs.

Hence, structural components made of composite materials are needed in order to reduce the overall weight of aircraft. As a matter of fact, the use of composite materials reduces the overall weight of aircraft and, at the same time, ensures very resistant structures.

Furthermore, the use of metal elements and the installation thereof in contact with the structures determine galvanic coupling problems, with consequent risks of corrosion of the metal and need to increase inspection levels. This leads to an increase in overall costs and in the weight of the structure for the manufacturers of said components and, hence, for airlines.

Therefore, the use of composite materials stems from the need to reduce the overall weight of aircraft, to facilitate assembly operations generating more integrated structures and to eliminate or minimize the corrosion problems affecting aeronautical structures, thus increasing the resistance to fatigue thereof.

Typically, the aforementioned structural components, for example fuselages or parts thereof, are manufactured by joining a skin made of a composite material with stiffening sub-components, such as:
- a plurality of stiffening stringers, which are also made of a composite material and are conveniently positioned parallel to a longitudinal extension direction of the fuselage;
- a plurality of stiffening ribs, which are also made of a composite material and are positioned transversely, in particular orthogonally, to the longitudinal extension direction of the fuselage.

In some configurations, the structural components comprise other stiffening sub-components, such as for example stiffening panels (known as "sandwich cores"), which typically consist of polymer foams or structures with a honeycomb core interposed between two layers or sheets of composite material and are positioned between the ribs instead of the stringers.

In the most common solutions, the composite material used is made of a non-cured fibre material, for example carbon fibre, which generally is pre-impregnated with a fluid resin according to a well-known process.

Therefore, the composite material is a material consisting of two phases: the matrix and the fibre. In particular, in case of pre-impregnated materials, each layer of material normally consists of a matrix (made of a thermosetting, thermoplastic resin, etc.) reinforced by fibres of different nature, such as carbon fibres, aramid fibres, glass fibres, etc..

In order to manufacture the akin, a plurality of layers of said pre-impregnated composite material are laminated to one another.

Similarly, in order to manufacture the stringers and the ribs, a plurality of layers of pre-impregnated composite material are placed on suitably shaped forming tools.

The skin and the stiffening sub-components (namely, the stringers and the ribs) must then be joined together in order to obtain an assembly.

The assembly thus formed is subsequently subjected to a curing process by applying high pressure and temperature, so as to cure the composite material, compact the aforementioned layers together and cause the joining of the stringers and the ribs to the skin *("co-curing"*).

According to some known methods, the stiffening sub-components (i.e. the stringers and the ribs) can also be treated in advance and be subsequently joined, by means of an adhesive film, to the skins in order to obtain an assembly.

The assembly thus formed is subsequently subjected to a curing process by applying high pressure and temperature, so as to cure the composite material, compact the aforementioned layers together and cause the joining of the stringers and the ribs to the skin *("co-bonding").*

By so doing, the structural component is manufactured. The manufacturing of the structural component can be carried out in different ways.

A first mode known as *"Inner Mould Line"* or IML involves the use of a curing tool, often called a "spindle", which is externally shaped so as to define the internal surface of the structure to be built, for example the fuselage. The spindle basically has a substantially cylindrical shape with respective longitudinal cavities, each designed to accommodate a stiffening stringer.

Once the stringers are positioned in the aforementioned cavities of the spindle, different types of inserts, known in the industry as *"bladders"* and *"noodles",* are inserted into the various cavities that are formed following the positioning of the stringers on the spindle; these inserts are designed to hold the various components in position and to prevent them from being crushed due to the high pressure during the following curing step.

At this point, the assembly consisting of spindle, stringers and inserts is covered with the relative skin that will constitute the external surface of the aforementioned fuselage (or fuselage portion).

In detail, a plurality of aforementioned layers of pre-impregnated fibre composite material are laminated on the assembly consisting of spindle, stringers and inserts.

According to a known method, this lamination (also known as "layering") is carried out by means of an automatic machine usually called "AFPM" *("Automated Fibre Placement Machine"),* said automatic machine laminating each layer of composite material constituting the skin on top of the spindle and, therefore, on top of the previously applied layer. Preferably, each layer is laminated with a different fibre orientation from the previous layer and the next layer, in a known manner.

After curing, a hollow "barrel" or "cylinder" will be obtained, which consists of the skin and the stringers attached to the skin in the area of the internal surface of the latter.

Although the first IML mode described above is functionally valid, the Applicant observed that it has some disadvantages:
- the use of the spindle is somewhat laborious and complicated, as it requires a long preparation of the spindle as well as a spindle that is suitable and shaped for each application (since the arrangement of the stringers can change depending on the type of structural component to be manufactured);
- since the spindle generally is axially symmetrical, it is necessary to secure the stringers and inserts placed in the lower cavities, with a consequent increase in preparation times and in the number of necessary parts as well as in total costs;
- the ribs must be manually fixed to the internal side surface of the aforementioned "barrel" or to the finished "cylinder" after the latter has been manufactured, which can be very complicated, especially if the cylinder has a large axial extension;
- the fixing of the ribs to the finished cylinder often requires the use of compensating elements or thicknesses (a technique known as *"shimming"),* since the skin will not be perfectly tolerant, especially for large-sized structural components;
- the removal (or "slipping-off") of the spindle is somewhat complicated and laborious and limits the possible conformation of the geometry of the structural component, as this geometry needs to be quite simple and to not have undercuts or excessive variations in section;
- this type of process requires that the machining cannot be performed in a parallel manner due to the use of one single spindle and this implies a maximum production rate that is not high.

This leads to a considerable increase in production times and total costs.

A second mode of production of the structural component involves separately manufacturing a plurality of "panels", which are then joined together to form the structural component.

In detail, each panel is manufactured as follows:
- a plurality of layers of non-cured composite material are laminated on a forming tool, in order to form the skin;
- a certain number of stringers are placed on the previously laminated skin and fixed thereto, for example by means of an adhesive material;
- the assembly thus formed is subjected to the aforementioned curing process, so as to firmly join the stringers to the skin.

The panels thus obtained are then joined together.

The Applicant observed that this second production mode also has some disadvantages:
- it is necessary to use joining elements between the various panels, such as for example titanium joints arranged longitudinally along the joining lines between the panels, said joints considerably increasing the overall weight of the structural component;
- the joining lines, namely the aforementioned joints, define the critical load points of the structural component, namely the areas that support the operating loads;
- therefore, the joining lines thus obtained define stress zones that are particularly subjected to operating stresses, thus defining potential weak spots of the structural component. EP2989001 B1 discloses a method for manufacture of an airfoil comprising a skin component bonded with a stringer and with a rib foot.

### SUBJECT-MATTER AND SUMMARY OF THE INVENTION

The object of the invention is to provide a method for manufacturing a structural component, which is highly reliable and has a limited cost as well as solves at least some of the drawbacks discussed above relating to known manufacturing methods.

According to the invention, this object is reached by a method as claimed in claim 1.

Furthermore, the object of the invention is to provide a stiffened structural component made of a composite material, which is highly reliable and has a limited cost as well as solves at least some of the drawback discussed above relating to known structural components.

According to the invention, this object is reached by a structural component as claimed in claim 12

### BRIEF DESCRIPTION OF THE DRAWINGS

The invention will be best understood upon perusal of the following description of some preferred non-limiting embodiments thereof, which are discussed by mere way of example, with reference to the accompanying drawings, wherein:
- figures 1 to 6 are schematic perspective views, with parts removed for greater clarity, showing distinct and successive steps of the manufacturing method according to the invention, in particular for manufacturing of a sub-panel of the structural component according to the invention;
- figures 7 to 10 are schematic perspective views, with parts removed for greater clarity, showing further distinct and successive steps of the manufacturing method according to the invention, in particular subsequent to the steps of figures 1 to 6;
- figure 11 is a schematic perspective view, with parts removed for greater clarity, showing a sub-panel of the structural component according to an alternative embodiment of the invention; and
- figure 12 is a partially sectional perspective view, with parts removed for greater clarity, of the structural component according to an alternative embodiment of the invention.

### DETAILED DESCRIPTION

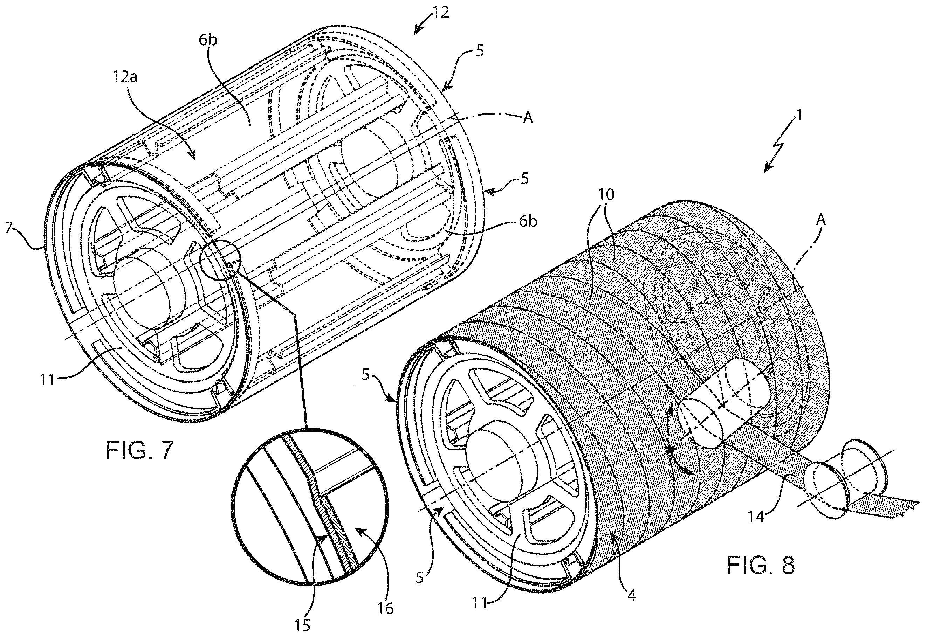

With reference to the attached figures and, in particular, to figures 8, 9, 10, number 1 indicates, as a whole, a structural component made of a reinforced composite material with stiffening sub-components, such as stiffening stringers 2 made of a composite material and stiffening ribs 3 made of a composite material.

The structural component 1 comprises a skin 4 formed by a plurality of layers of composite material, to which the stringers 2 and the ribs 3 are fixed, in a manner described below.

In particular, this description will explicitly relate, without for this reason lacking generality, to a structural component 1 employed in the aerospace industry and defining, for example, a fuselage made of a composite material or a part thereof.

More in particular, the component 1 described and shown herein defines a cylindrical modular portion of an aircraft fuselage.

Alternatively, the structural component 1 can be defined by a tank made of a composite material or by a part thereof, as better explained below.

According to the preferred and non-limiting embodiment described and shown herein, the component 1 has a substantially cylindrical or cylinder-like shape (for example, including various changes of radius and/or cross section) around a central longitudinal axis A.

Preferably, the stringers 2 are arranged on the skin 4 (or oriented) parallel to a longitudinal direction of the component 1, defined by the axis A.

In detail, each stringer 2 is of a known kind and is preferably defined by a spar having a preferably omega-shaped cross section, defining a central cavity delimited by the stringer 2 and by the skin 4. Basically, each stringer 2 delimits, with the skin 4, a hollow section with a closed profile.

Alternatively, each spar defining the respective stringer 2 could have a different cross section, for example a rectangular or semi-circular, T-shaped, double T-shaped, L-shaped cross section.

Each stringer 2 has an extension in a longitudinal direction that is substantially greater than the extension in the other two directions orthogonal to said longitudinal direction.

According to a preferred alternative embodiment which is not shown herein, each stringer 2 is defined by a multilayer stiffening panel (known as a *"sandwich core")* comprising an internal structural core, which can be defined by a polymer foam (known as a *"foam core")* or by a honeycomb structure (known as a *"honeycomb core")* interposed between two layers or sheets or plies of composite material (of the type described below).

The term "stringer" basically indicates, in this description and in the appended claims, both a spar of the aforesaid type and a stiffening panel of the aforesaid *core sandwich* type.

The ribs 3 are arranged on the skin 4 (or oriented) transversely, in particular orthogonally, to the longitudinal direction of the component 1.

In detail, the ribs 3 have a curved shape, so as to adapt to the curvature of the skin 4, and define circumferential reinforcements for the skin 4.

The use of structural components made of composite materials stems from the need to reduce the overall weight of the structural component 1.

In an embodiment, the composite material consists of a fibre material, for example carbon fibre, which is not cured or pre-cured in a manner explained below.

In an embodiment, said material is pre-impregnated with a fluid resin according to a well-known process not described in detail.

In practice, each layer of composite material normally consists of a prepreg with a thermosetting (resin) matrix reinforced by fibres of different nature, such as carbon fibres, aramid fibres, glass fibres, etc..

The invention relates to a method for manufacturing the structural component 1.

In particular, this description will make explicit reference to the manufacturing of a hollow cylindrical (i.e. tubular) component 1, without thereby lacking generality.

However, the structural and functional features and the steps of the method can be considered equally applicable to the manufacturing of a structural component 1 with any shape, as long as it defines an internal volume delimited by the skin 4.

Therefore, in this case (as shown in figure 8), the skin 4 has a (substantially) cylindrical shape having a central longitudinal axis corresponding to the axis A. The stringers 2 are arranged with the respective longitudinal axes preferably parallel to the axis A and the ribs 3 are arranged with the respective axes transverse to the axis A.

In an alternative embodiment which is not shown herein, small non-zero angles could be defined between the axes of the stringers 2 and the axis A, so that the stringers 2 are not parallel to the axis A.

With reference to the accompanying figures, the process or method for manufacturing the structural component 1 will be described below.

The structural component 1 comprises a plurality of sub-panels 5 joined together (in a manner described below).

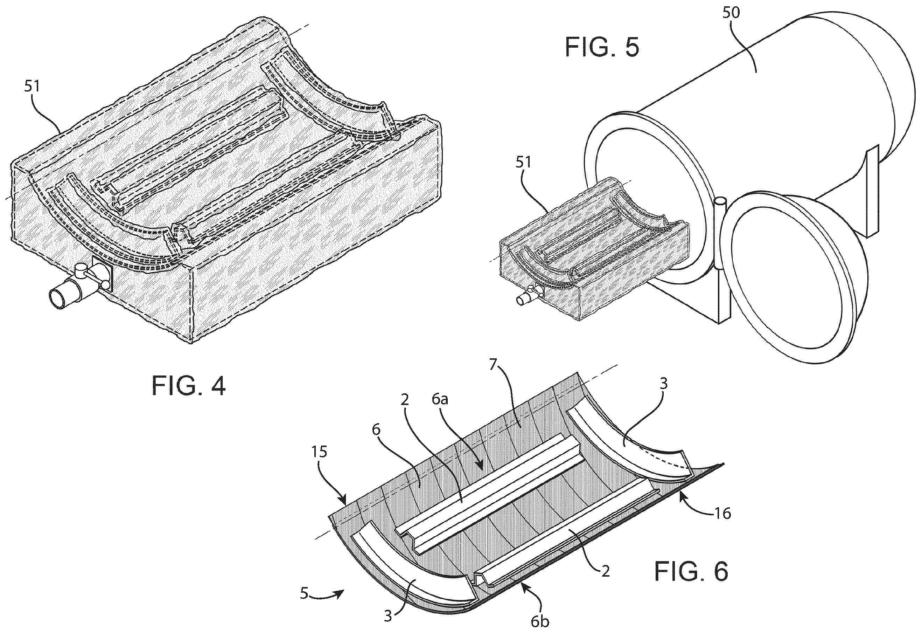

As shown in figure 6, each sub-panel 5 comprises a sub-skin 6 and at least one stringer 2 and one rib 3 fixed to an internal surface 6a of the sub-skin 6, preferably a plurality of stringers 2 and ribs 3, for example two stringers 2 and two ribs 3.

The sub-skin 6 further has an external surface 6b opposite the internal surface 6a.

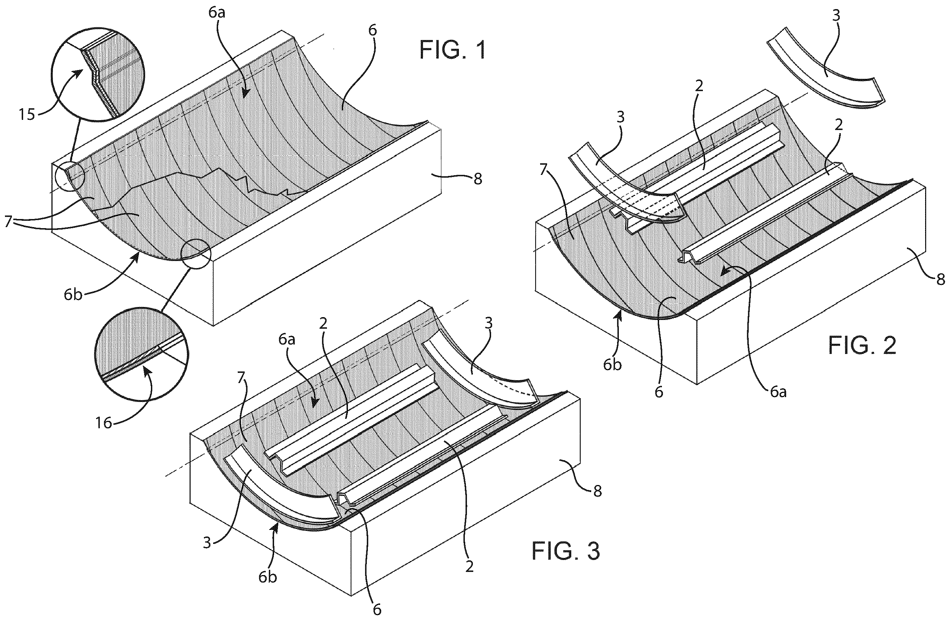

According to the invention and with reference to figure 1, the sub-skin 6 of each sub-panel 5 is obtained by laminating first layers 7 of non-cured composite material on a forming tool 8.

This leads to obtaining the sub-skin 6 made a of fibre composite material, which at first is not cured.

Each one of the first layers 7 is defined, for example, by a so-called "prepreg".

The sub-skin 6 thus formed has the external surface 6b in contact with the forming tool 8.

In practice, in order to form the sub-skin 6, the method according to the invention comprises the step of laminating first layers 7 of non-cured composite material on the forming tool 8, thus forming a sub-skin 6 having a first surface 6b in contact with the forming tool 8 and a second surface 6a opposite the first surface 6b (figure 1).

Preferably, the first layers 7 are laminated with the fibres of the composite material parallel to a common direction, preferably the longitudinal direction of the structural component 1.

The step of laminating the first layers 7 basically comprises:
- laminating layers 7 of fibre composite material; and
- arranging the first layers 7 so that the fibres of all first layers are parallel to a common direction, preferably the longitudinal direction of the structural component 1.

The Applicant observed that this configuration provides an optimal resistance of the sub-skin 6 to mechanical stresses, at the same time simplifying the forming of the sub-skin 6.

Alternatively, each one of the first layers 7 is laminated according to a direction of its own, which can be different from (namely, not parallel to) the direction of lamination of the other first layers 7.

It should be pointed out that the sub-skin 6 is part of the skin 4 and is defined by a plurality of layers of composite material that is smaller than the totality of layers making up the skin 4.

In particular, the skin 4 consists of first layers 7 and second layers 10 of composite material, as better explained below. In other words, the aforementioned totality of layers of the skin 4 exclusively comprises the first layers 7 and the second layers 10 (the latter visible in figure 8).

In order to complete the forming of the sub-panel 5, the method also comprises the steps of:
- placing at least one stringer 2 (and, hence, a spar or a stiffening panel, as described above), in particular a plurality of stringers 2, for example two stringers 2, made of a pre-cured composite material on the internal surface 6a of the sub-skin, along a direction that is parallel to the longitudinal direction of the structural component 1, namely to the axis A (figure 2);
- placing at least one rib 3, in particular a plurality of ribs 3, for example two ribs 3, made of a pre-cured composite material on the internal surface 6a, along a direction that is transverse, in particular orthogonal, to the longitudinal direction of the structural component 1, namely to the axis A (figure 3); and
- applying pre-set temperature and pressure to the assembly defined by the sub-skin 6, by the stringers 2 and by the ribs 3, so as to cure the composite material and determine the rigid and integral fixing of the stringers 2 and of the ribs 3 to the internal surface 6a (figure 5).

Preferably, the stringers 2 and the ribs 3 are placed on the sub-skin 6 by interposing an adhesive material, which is known per se and is not described in detail.

The composite material constituting the stringers 2 and the ribs 3 preferably is already cured (pre-cured) and the curing step (applying temperature and pressure) is used to cure the material of the sub-skin 6 and to rigidly fix the stringers 2 and the ribs 3 to it.

The curing is preferably carried out by inserting the assembly comprising sub-skin 6, stringers 2 and ribs 3 into an autoclave 50, which is schematically shown in figure 5.

Furthermore, said assembly is preferably wrapped in a vacuum bag 51, of the known type and not described in detail, to facilitate the compaction of the composite material of the different parts to be coupled.

In this case, the method further comprises the steps of:
- placing the assembly defined by the sub-skin 6, by the stringers 2 and by the ribs 3 in a vacuum bag 51;
- applying vacuum inside the vacuum bag 51.

The assembly wrapped in the vacuum bag 51 is then inserted into the autoclave 50 for curing.

Preferably, according to a known process which is not described in detail, different types of inserts, known in the industry as *"bladders"* and *"noodles",* are inserted into the various cavities that are formed following the positioning of the stringers 2 on the sub-skin 6; these inserts are designed to hold the stringers 2 in position and to prevent them from being crushed due to the high pressure applied during the curing step.

In this way, a sub-panel 5 made of a cured composite material is obtained.

This sub-panel 5 is reinforced with stringers 2 and the ribs 3 and, at the same time, has a very small thickness defined by the thickness of the sub-skin 6, which only comprises the first layers 7.

Hence, the sub-skin 6 is relatively thin, for it has the minimum number of layers of composite material deemed to be structurally indispensable. For example, if the skin 4 has a total number of layers (resulting from the sum of the number of first layers 7 and second layers 10) amounting to ten layers, the first layers 7 are, for example, two and the second layers 10 are, therefore, eight.

Therefore, advantageously, the step of laminating the first layers 7 comprises laminating at most two layers 7 of non-cured composite material, preferably two layers 7.

The procedure described above is repeated to obtain a plurality of sub-panels 5 made of a cured composite material, of the type shown in figure 6.

In an embodiment, a plurality of forming tools 8 could be used to form the plurality of sub-panels 5 in parallel, thereby reducing forming times.

In order to proceed with the production of the structural component 1 and with reference to figure 7, the method according to the invention also comprises the steps of:
- placing the previously obtained sub-panels 5 on a central support 11, so as to at least partially surround the central support 11 and so that the internal surface 6a of each sub-skin 6 faces the central support 11 and the external surface 6b of each sub-skin faces outwards (as shown in figure 7); and
- joining together pairs of laterally (mutually) adjacent sub-panels 5 in the area of the respective sub-skins 6 (in a way that is better described below), so as to define a pre-component 12 having a continuous external surface 12a defined by the set of external surfaces 6b of the sub-skins 6 of the jointed sub-panels 5.

More precisely, by means of the step of placing the sub-panels 5 on the central support 11, an internal volume is defined, which is delimited by the set of internal surfaces 6a and (at least partially) houses the central support 11.

According to this preferred and non-limiting embodiment, the central support 11 is defined by a sort of spoke system that supports the sub-panels 5 in the area of the internal surface 6a of the relative sub-panels 6.

In the embodiment shown herein, wherein the structural component 1 is substantially cylindrical, the aforesaid internal volume is cylindrical.

Alternatively, the internal volume could take any shape, dictated by the shape of the sub-panels 5. In this case, it is sufficient to adapt the central support 11, i.e. the spoke system, to the different shape of the sub-panels 5 in order to support a pre-component 12 having any shape.

Preferably, the sub-panels 5 are placed on the central support 11 and then joined together, so that the respective ribs 3 are circumferentially aligned around the axis A.

According to an important aspect of the invention and with reference to figure 8, the skin 4 is obtained by laminating the second layers 10 of non-cured composite material on the external surface 12a of the pre-component, so as to define a continuous external over-skin 13 on the pre-component 12 and so as to define the skin 4.

In detail, the skin 4 consists, as specified above, of the first layers 7 and the second layers 10.

More in detail, the skin 4 comprises, in particular consists of, the sub-skin 6 and the over-skin 13.

In other words, the method according to the invention comprises the step of:
- laminating second layers 10 of non-cured composite material on the external surface 12a of the pre-component 12, so as to define a continuous external over-skin 13 on the pre-component 12 and so as to define the skin 4, which consists of the first layers 7 and the second layers 10.

Advantageously, the lamination of the second layers 10 on the pre-component 12 is carried out by applying a continuous fibre 14 of composite material on the external surface 12a and, subsequently, by layering the continuous fibre 14 on the external surface 12a.

In other words, the step of laminating the second layers 10 comprises:
- applying a continuous fibre (14) of composite material on the external surface 12a; and
- layering the continuous fibre 14 on the external surface 12a.

In detail, the aforementioned layering is obtained through continuous application of the continuous fibre 14 around and on the pre-component 12, defining a plurality of complete coatings of the external surface 12a, wherein each coating subsequent to the first one covers the previous (lower) coating.

Each one of these coatings defines one of the second layers 10, which define, as a whole, the over-skin 13.

Thanks to the layering of a continuous fibre 14 as described above, the component 1 is able to withstand high stresses in operation.

Thanks to the method according to the invention, the pre-component 12 itself defines a tool, or a sort of spindle, on which to lay up the second layers 10 and complete the forming of the skin 4**.**

Owing to the above, the structural component 1 comprises a continuous sub-wall 12a defined by the external surface 12a, namely defined by the union of the external surfaces 6b of the sub-skins 6 of the sub-panels 5 joined to one another. The second layers 10 are laminated on the first layers 7 so as to define the over-skin 13 layered on the aforesaid sub-wall 12a.

In order to complete the production of the structural component 1, the method further comprises the step of:
- applying pre-set temperature and pressure to the assembly comprising the pre-component 12 and the continuous external over-skin 13 layered on top of it, so as to cure the composite material and determine the rigid and integral fixing of the second layers 10 to the first layers 7.

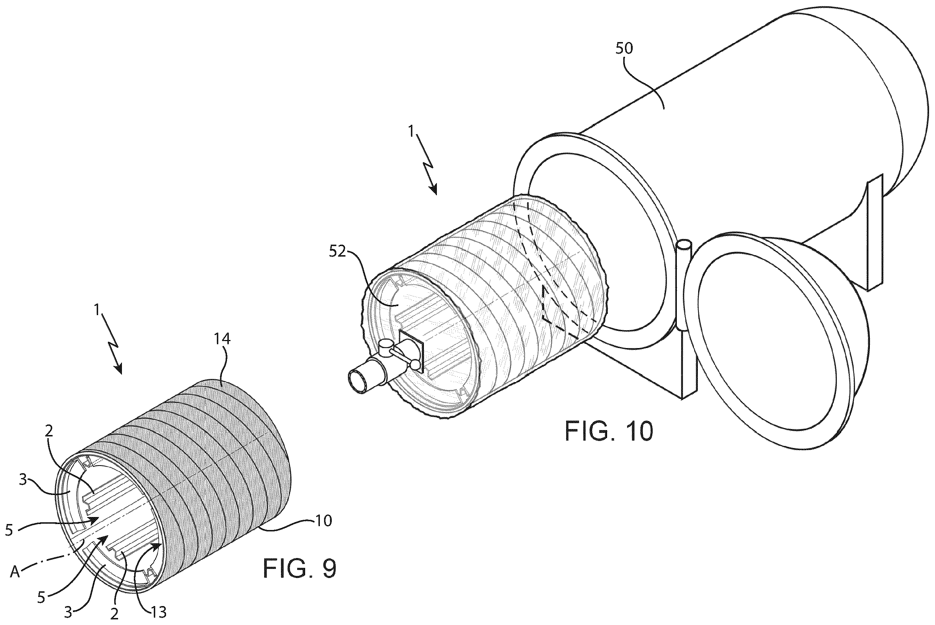

Preferably, as shown in figures 9 and 10, this assembly is wrapped in a corresponding vacuum bag 52, inside which a vacuum is applied, and is then inserted into the autoclave 50.

By so doing, the stiffened structural component 1 made of a cured composite material is obtained.

According to figure 1, by laminating the first layers 7 on the forming tool 8, lateral edges 15, 16 of the sub-skin 6 are formed.

According to a further preferred aspect of the invention, the step of joining comprises overlapping a lateral edge 16 of a first sub-panel 5 and a lateral edge 15 of a second sub-panel 5 adjacent to the first sub-panel 5, as shown in detail in the enlargement of figure 7.

More precisely, a first lateral edge 15 defines a receiving portion, which, in the embodiment shown herein, consists of a longitudinal recess preferably extending along the entire longitudinal extension of the edge 15 and, hence, of the sub-skin 6.

Similarly, a second lateral edge 16 defines a coupling portion, which longitudinally extends along the entire longitudinal extension of the edge 16 and, hence, of the sub-skin 6.

In order to join two adjacent sub-panels 5, the receiving portion 15 is engaged by the coupling portion 16 (figure 7).

In detail, these sub-panels 5 are placed on the central support 11 so that the edge 16 engages the recess defined by the edge 15 or, rather, so that the edge 16 overlaps the edge 15 (which defines a recess).

More in detail, the edge 16 of a sub-panel 5 overlaps the edge 15 of the adjacent sub-panel, so that the edge 16 is radially more on the outside than the edge 15.

In other words:
- the step of laminating the first layers 7 comprises shaping, in the area of the first lateral edge 15, a receiving portion and shaping, in the area of the second lateral edge 16, a coupling portion; and
- the step of joining comprises: engaging the receiving portion 15 of a first sub-panel 5 with the coupling portion 16 of a second sub-panel 5 adjacent to the first one and fixing the receiving portion 15 and the coupling portion 16 to one another.

In practice, the joining between the sub-panels 5 takes place simply by means of a sort of male-female coupling, without the need to provide complicated joining elements that can weigh down the structural component 1 and ensuring the continuity of the lamination surface for the lamination of the over-skin 13.

Thanks to this configuration, the joining between the sub-panels 5 is considerably simplified, compared to the known case.

Preferably, an adhesive layer is interposed between the receiving portion 15 and the coupling portion 16.

In this case, the step of joining further includes fixing the receiving portion 15 and the coupling portion 16 to one another by interposing an adhesive layer (not shown) between them.

In this way, a firm joining between the sub-panels 5 is ensured.

Furthermore, the Applicant observed that, thanks to this type of joining, the resistance to an internal stress, for example a variation in the pressure external to component 1 with respect to that internal to it, has significantly improved.

In an embodiment, the lamination of the first layers 7 on the forming tool 8 is carried out by means of a laminating device, for example an automatic machine of the "AFPM" *("Automated Fibre Placement Machine")* type, which known per se and not shown herein.

Conveniently, during the lamination, the forming tool 8 is moved towards the laminating device by an offset (not shown) equal to the thickness of the set of second layers 10 constituting the over-skin 13.

In other words, the method further comprises the step of moving the forming tool 8 towards the laminating device by an offset equal to the thickness of the set of second layers 10, namely equal to the thickness of the over-skin 13.

In this way, the lamination process is simplified, as users can avoid programming the laminating device to perform different types of lamination, distinct from the classic lamination of an entire skin. The flexibility of the lamination process is thus increased.

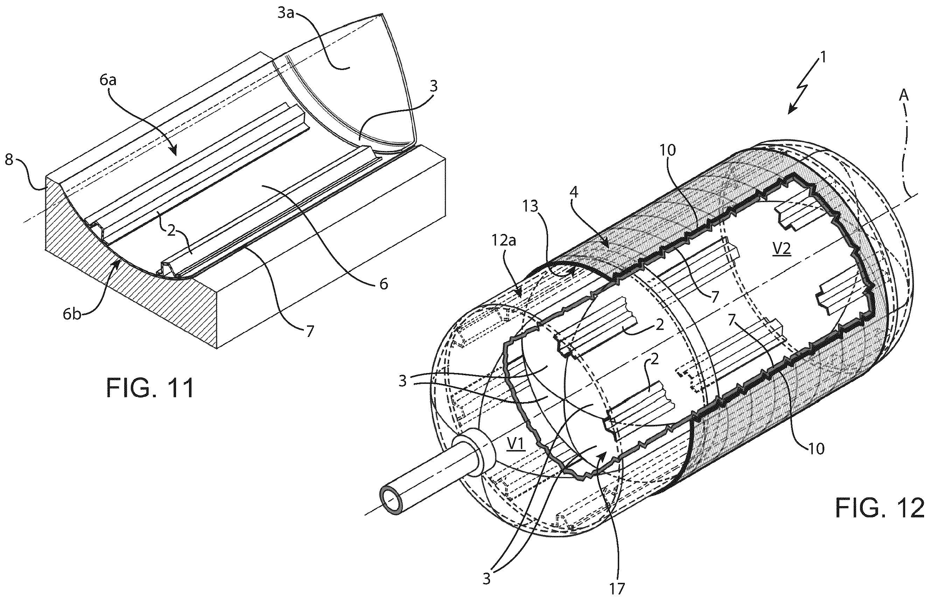

Figures 11 and 12 show an alternative embodiment of the structural component 1 according to the invention.

According to this embodiment, the structural component 1 is defined by a tank, preferably a cylindrical tank, with at least two internal volumes V1, V2 separated by a bulkhead 17.

According to the invention, the bulkhead 17 is defined by at least some of the ribs 3 of the sub-panels 5 joined together.

More precisely, as shown in figure 11, in order to manufacture each sub-panel 5 of the component 1 defined by the tank, a rib 3 provided with a projecting portion 3a is placed on the surface 6a of the sub-skin 6.

The projecting portion 3a has a shape that is such as to extend inwards at least up to the space occupied by the axis A once the component 1 is formed.

To this regard, the method further comprises the step of placing the ribs 3 of the different sub-panels 5 in respective positions adjacent to one another by means of the steps of placing the ribs 3 and of joining the sub-panels, to define a bulkhead 17 of the structural component 1 formed by the set of ribs 3.

In other words, each rib 3 defines a sector of the bulkhead 17.

According to figure 12, the bulkhead 17 separates the two volumes V1, V2 of the tank.

Conveniently, each rib 3 has a transverse extension such that it protrudes transversely from the relative sub-skin 6 (not shown). In this way, once the sub-panels 5 have been joined, the ribs 3 partially overlap. The bulkhead 17 will therefore be able to withstand high pressures.

Thanks to the configuration described above, it is possible to manufacture a tank of the *"common bulked"* type, namely having two separate internal volumes, in a simple and economic manner.

The features of the method for manufacturing a structural component 1 made of a composite material and of said structural component 1 according to the invention reveal evident advantages that can be obtained with them.

In particular, the use of a shaped central spindle (as in the IML manufacturing method described in the introduction to the description) is no longer necessary, since the pre-component 12 formed by assembling and joining the various sub-panels 5 defines itself a tool, namely a sort of "spindle", on which to laminate the remaining layers of the skin 4, namely the second layers 10.

This makes it possible to significantly reduce the amount of time needed to manufacture the component 1 (as no preparation of the spindle is necessary, with insertion of inserts and stringers, fixing thereof, etc.) as well as the overall dimensions and the total costs.

Furthermore, the manufactured part can comply with more stringent requirements in terms of profile and surface roughness.

Furthermore, the complicated and laborious insertion of the ribs in a previously formed finished "cylinder" or "barrel" is avoided.

In addition, since the ribs 3 are already fixed inside the pre-component 12, it is no longer necessary to perform the aforementioned *shimming* operation, since the ribs 3 are already fixed and cured on each sub-panel 5 and, therefore, do not need any thickness compensation.

Indeed, all the stiffening structures (i.e. stringers 2, ribs 3, possible reinforcement inserts (bladders and needles) and the possible adhesives are already placed on and fixed to the sub-skin 6 and, therefore, the pre-component 12 at the time of the final lamination of the second layers 10. In other words, both the stringers 2 and the ribs 3 are already cured and fixed to the sub-skin 6 *(co-bonding),* greatly simplifying the manufacturing of the component 1.

In addition, the Applicant observed that the structural component 1 thus obtained has an improved resistance to stresses: as a matter of fact, the second layers 10, namely the over-skin 13, bear the operating loads, whereas the sub-panels 5 and the joints between them only bear the loads exerted by the internal pressure.

To this regard, the fact that the second layers 10 are laminated in a continuous fibre 14 allows manufacturers to further increase the resistance to stresses.

Furthermore, thanks to the peculiar joining between the sub-panels 5 by means of the engagement of the receiving portions 15 by the coupling portions 16, it is possible to avoid the use of joining elements (for example, titanium joints), which remain as an integral part of the structural component. The component 1 will thus be decidedly lightened.

In addition, this joining configuration allows for a better resistance to internal stresses deriving from a variation of the pressure external to the component 1 with respect to the internal pressure thereof (as in the case of aircraft fuselages operating at high altitudes or in the case of pressure tanks), since the greater the thrust acting from the inside, the greater the compaction between the receiving portions 15 and the coupling portions 16, also thanks to the adhesive possibly interposed between them.

In light of the above, it is clear that the production advantage of manufacturing the external component "in one piece" (it is the over-skin 13 supporting the loads that is manufactured in one piece) is fully exploited, without the need to insert any reinforcement element or any subsequent joining element.

Therefore, the invention allows leads to improvements both from the structural point of view and from the point of view of streamlining and simplifying the process for manufacturing the component 1.

The method and the component 1 disclosed and shown herein can be subjected to changes and variants, without for this reason going beyond the scope of protection set forth in the appended claims.

## Claims

1. Method for manufacturing a structural element (1) in composite material comprising a skin (4) formed by a plurality of layers (7, 10) of composite material and reinforced with stiffening stringers (2) and ribs (3) fixed to said skin (4), the method including the steps of:
a) laminating first layers (7) of non-cured composite material onto a forming tool (8) thus forming a sub-skin (6) having a first surface (6b) in contact with the forming tool (8) and a second surface (6a) opposite to the first surface (6b);
b) arranging at least one stiffening stringer (2) made of pre-cured composite material on the second surface (6a) of the sub-skin (6), along a direction substantially parallel to a longitudinal direction of the structural component (1);
c) arranging at least one stiffening rib (3) made of pre-cured composite material on the second surface (6a) of the sub-skin (6), along a transversal direction which is transversal to the longitudinal direction of the structural component (1);
d) applying pre-set temperature and pressure to the assembly defined by the sub-skin (6), by the at least one stringer (2) and by the at least one rib (3), so as to cure the composite material and determine the rigid and integral fixing of the stringer (2) and of the rib (3) to the second surface (6a) of the sub-skin (6), thus obtaining a sub-panel (5) made of cured composite material;
e) repeating steps a) to d) to obtain a plurality of sub-panels (5);
f) arranging the obtained sub-panels (5) onto a central support (11), so as to at least partially surround the central support (11) and so that the second surface (6a) of each sub-skin (6) faces towards the central support (11) and the first surface (6b) of each sub-skin (6) faces outwards;
g) joining together pairs of laterally adjacent sub-panels (5) at the respective sub-skins (6), so as to define a pre-component (12) having a continuous external surface (12a) defined by the set of the first surfaces (6b) of the sub-skins (6) of the jointed sub-panels (5);
h) laminating second layers (10) of non-cured composite material on the external surface (12a) of the pre-component (12), so as to define a continuous external over-skin (13) onto the pre-component (12), and so as to define said skin (4), said skin (4) consisting of said first layers (7) and said second layers (10); and
i) applying pre-set temperature and pressure to the assembly comprising the pre-component (12) and the continuous external over-skin (13), so as to cure the composite material and determine the rigid and integral fixing of the second layers (10) to the first layers (7).

2. Method as claimed in claim 1, wherein the step h) of laminating second layers comprises:
- applying a continuous fiber (14) of composite material on said external surface (12a) of the pre-component (12); and
- layering said continuous fiber (14) on said external surface (12a) of the pre-component (12).

3. Method as claimed in claim 1 or 2, wherein the step a) of laminating first layers comprises laminating at most two layers (7) of non-cured composite material, and preferably comprises laminating two layers (7) of non-cured composite material.

4. Method as claimed in any one of the foregoing claims, wherein the step a) of laminating first layers comprises:
- laminating layers (7) of fiber composite material;
- arranging the first layers (7) so that the fibers of all the first layers are parallel to a common direction, preferably the longitudinal direction of the structural component (1).

5. Method as claimed in any one of the foregoing claims, wherein the step a) of laminating first layers comprises forming lateral edges (15, 16) on said sub-skin (6);
and wherein the step g) of joining comprises overlapping a lateral edge (16) of a first sub-panel (5) with a lateral edge (15) of a second sub-panel (5) adjacent to the first sub-panel (5).

6. Method as claimed in claim 5, wherein the step a) of laminating first layers includes shaping, at a first one of said lateral edges (15, 16), a receiving portion (15) and shaping, at a second one of said lateral edges (15, 16), a coupling portion (16);
and wherein the step g) of joining includes:
- engaging the receiving portion (15) of a first sub-panel (5) with the coupling portion (16) of a second sub-panel (5) adjacent to the first sub-panel (5);
- fixing the receiving portion (15) and the coupling portion (16) to one another.

7. Method as claimed in claim 6, in which the step g) of joining further includes fixing the receiving portion (15) and the coupling portion (16) to one another by interposing an adhesive layer between them.

8. Method as claimed in any one of the foregoing claims, wherein the step d) of applying temperature and pressure comprises:
- arranging the assembly defined by the sub-skin (6), by the at least one stringer (2) and by the at least one rib (3) in a vacuum bag (51);
- applying vacuum inside the vacuum bag (51);
and/or wherein the step i) of applying temperature and pressure includes:
- arranging the assembly including the pre-component (12) and the continuous external over-skin (13) in a vacuum bag (52);
- applying vacuum inside the vacuum bag (52).

9. Method as claimed in any one of the foregoing claims, and further comprising the step of:
1) arranging the ribs (3) of different sub-panels (5) in respective positions adjacent to one another by means of the steps f) of arranging and g) of joining, to define a bulkhead (17) of the structural component (1) formed by the set of ribs (3);
wherein the structural component (1) is defined by a tank with at least two internal volumes (V1, V2) separated by said bulkhead (17).

10. Method as claimed in any one of the foregoing claims, wherein step a) of laminating first layers (7) is performed by means of a laminating device;
and wherein the method further comprises the step of:
m) moving the forming tool (8) towards the laminating device by an offset equal to the thickness of the set of second layers (10) constituting the over-skin (13) .

11. Method as claimed in any one of the foregoing claims, wherein each stringer (2) is defined by:
- a spar; or
- a multilayer stiffening panel comprising an internal structural core, defined by a polymer foam or a honeycomb structure, sandwiched between two layers or sheets of said composite material.

12. Structural component (1) made of composite material and comprising:
- a skin (4) formed by a plurality of layers (7, 10) of composite material;
- a plurality of stiffening stringers (2) made of composite material, fixed to the skin (4) and oriented substantially parallel to a longitudinal direction of the structural component (1); and
- a plurality of stiffening ribs (3) made of composite material, fixed to the skin (4) and oriented transversally to the longitudinal direction of the structural component (1);
the structural component (1) having a plurality of sub-panels (5) joined to one another and comprising, each, a sub-skin (6) defined by first layers (7) of said plurality of layers of composite material and at least one stringer (2) and at least one rib (3) which are fixed to an internal surface (6a) of the sub-skin (6);
wherein each sub-skin (6) has an external surface (6b) opposite to said internal surface (6a);
wherein the structural component (1) comprises a continuous sub-wall (12a) defined by the union of the external surfaces (6b) of the sub-skins (6) of the sub-panels (5) joined to one another;
wherein second layers (10) of said plurality of layers of composite material are laminated onto the first layers (7) so as to define a continuous external over-skin (13) layered on said sub-wall (12a);
and wherein the skin (4) is defined by the set of said sub-skin(6) and said over-skin (13), and consists of the first layers (7) and the second layers (10).

13. Structural component as claimed in claim 12, wherein:
- the second layers (10) are defined by a continuous fiber (14) of composite material laminated and stratified on said sub-wall (12a); and/or
- the first layers (7) comprise a maximum of two, preferably two, layers of composite material; and/or
- each of the first layers (7) comprises a layer of fiber composite material, the fibers of all the first layers being parallel to a common direction, preferably the longitudinal direction of the structural component (1).

14. Structural component as claimed in claim 12 or 13, wherein each stringer (2) is defined by:
- a spar; or
- a multilayer stiffening panel comprising an internal structural core, defined by a polymer foam or a honeycomb structure, sandwiched between two layers or sheets of said composite material.

## Patentansprüche

1. Verfahren zum Herstellen eines Strukturbauteils (1) aus einem Verbundmaterial, das eine Haut (4) aufweist, die aus einer Vielzahl von Schichten (7, 10) aus einem Verbundmaterial gebildet und mit Versteifungsstringem (2) und -rippen (3) verstärkt ist, die an der Haut (4) fixiert sind, wobei das Verfahren die Schritte aufweist:
a) Laminieren erster Schichten (7) aus ungehärtetem Verbundmaterial auf ein Formwerkzeug (8), wodurch eine Teilhaut (6) gebildet wird, die eine mit dem Formwerkzeug (8) in Kontakt stehende erste Oberfläche (6b) sowie eine der ersten Oberfläche (6b) gegenüberliegende zweite Oberfläche (6a) aufweist;
b) Anordnen mindestens eines Versteifungsstringers (2) aus vorgehärtetem Verbundmaterial auf der zweiten Oberfläche (6a) der Teilhaut (6) entlang einer Richtung, die sich im Wesentlichen parallel zur Längsrichtung des Strukturbauteils (1) erstreckt;
c) Anordnen mindestens einer Versteifungsrippe (3) aus vorgehärtetem Verbundmaterial auf der zweiten Oberfläche (6a) der Teilhaut (6) entlang einer Querrichtung, die sich quer zur Längsrichtung des Strukturbauteils (1) erstreckt;
d) Bereitstellen einer voreingestellten Temperatur für und Ausüben eines voreingestellten Drucks auf die Baugruppe, die durch die Teilhaut (6), den mindestens einen Stringer (2) und die mindestens eine Rippe (3) definiert ist, um das Verbundmaterial auszuhärten und die starre und integrale Fixierung des Stringers (2) und der Rippe (3) an der zweiten Oberfläche (6a) der Teilhaut (6) zu realisieren, wodurch eine Teilplatte (5) aus ausgehärtetem Verbundmaterial erhalten wird;
e) Wiederholen der Schritte a) bis d), um eine Vielzahl von Teilplatten (5) zu erhalten;
f) Anordnen der erhaltenen Teilplatten (5) auf einem mittigen Träger (11), so dass diese den mittigen Träger (11) zumindest teilweise umschließen, und so dass die zweite Oberfläche (6a) jeder Teilhaut (6) dem mittigen Träger (11) zugewandt ist und die erste Oberfläche (6b) jeder Teilhaut (6) nach außen zeigt;
g) Verbinden von Paaren seitlich benachbarter Teilplatten (5) miteinander an den jeweiligen Teilhäuten (6), um eine Vor-Komponente (12) mit einer durchgehenden Außenfläche (12a) zu definieren, die durch den Satz aus den ersten Oberflächen (6b) der Teilhäute (6) der miteinander verbundenen Teilplatten (5) definiert ist;
h) Laminieren zweiter Schichten (10) aus ungehärtetem Verbundmaterial auf die Außenfläche (12a) der Vor-Komponente (12), um eine durchgehende äußere Überhaut (13) auf der Vor-Komponente (12) zu bilden und die Haut (4) zu definieren, wobei die Haut (4) aus den ersten Schichten (7) und den zweiten Schichten (10) besteht; und
i) Bereitstellen einer voreingestellten Temperatur für und Ausüben eines voreingestellten Drucks auf die Baugruppe, die aus der Vor-Komponente (12) und der durchgehenden äußeren Überhaut (13) besteht, um das Verbundmaterial auszuhärten und die starre und integrale Fixierung der zweiten Schichten (10) an den ersten Schichten (7) bereitzustellen.

2. Verfahren nach Anspruch 1, wobei der Schritt h) zum Laminieren der zweiten Schichten aufweist:
Aufbringen einer Endlosfaser (14) aus Verbundmaterial auf die Außenfläche der Vor-Komponente (12); und
Aufschichten der Endlosfaser (14) auf die Außenfläche (12a) der Vor-Komponente (12).

3. Verfahren nach Anspruch 1 oder 2, wobei der Schritt a) zum Laminieren erster Schichten das Laminieren von höchstens zwei Schichten (7) aus unausgehärtetem Verbundmaterial aufweist und vorzugsweise das Laminieren von zwei Schichten (7) aus unausgehärtetem Verbundmaterial aufweist.

4. Verfahren nach einem der vorangehenden Ansprüche, wobei Schritt a) zum Laminieren erster Schichten aufweist:
Laminieren von Schichten (7) aus Faserverbundmaterial;
Anordnen der ersten Schichten (7) derart, dass die Fasern aller ersten Schichten parallel zu einer gemeinsamen Richtung verlaufen, vorzugsweise zur Längsrichtung des Strukturbauteils (1).

5. Verfahren nach einem der vorangehenden Ansprüche, wobei Schritt a) zum Laminieren erster Schichten das Ausbilden von Seitenrändern (15, 16) auf der Teilhaut (6) aufweist; und
wobei Schritt g) zum Verbinden das Überlappen eines Seitenrands (16) einer ersten Teilplatte (5) mit einem Seitenrand (15) einer der ersten Teilplatte (5) benachbarten zweiten Teilplatte (5) aufweist.

6. Verfahren nach Anspruch 5, wobei Schritt a) zum Laminieren erster Schichten das Ausbilden eines Aufnahmeabschnitts (15) an einem ersten der Seitenränder (15, 16) und das Ausbilden eines Kupplungsabschnitts (16) an einem zweiten der Seitenränder (15, 16) aufweist, und
wobei der Verbindungsschritt g) aufweist:
Ineingriffbringen des Aufnahmeabschnitts (15) einer ersten Teilplatte (5) mit dem Kupplungsabschnitt (16) einer der ersten Teilplatte (5) benachbarten zweiten Teilplatte (5);
Fixieren des Aufnahmeabschnitts (15) und des Kupplungsabschnitts (16) aneinander.

7. Verfahren nach Anspruch 6, wobei der Verbindungsschritt g) ferner das Fixieren des Aufnahmeabschnitts (15) und des Kupplungsabschnitts (16) aneinander durch Einfügen einer Klebeschicht dazwischen aufweist.

8. Verfahren nach einem der vorangehenden Ansprüche, wobei der Schritt d) zum Bereitstellen einer Temperatur und Ausüben eines Drucks aufweist:
Anordnen der durch die Teilhaut (6), durch den mindestens einen Stringer (2) und durch die mindestens eine Rippe (3) definierten Baugruppe in einem Vakuumbeutel (51);
Erzeugen eines Vakuums im Inneren des Vakuumbeutels (51), und/oder wobei Schritt i) zum Bereitstellen einer Temperatur und Ausüben eines Drucks aufweist:
Anordnen der Baugruppe, die den Vor-Komponente (12) und die durchgehende äußere Überhaut (13) aufweist, in einem Vakuumbeutel (52); und
Erzeugen eines Vakuums im Inneren des Vakuumbeutels (52).

9. Verfahren nach einem der vorangehenden Ansprüche, ferner aufweisend den Schritt:
l) Anordnen der Rippen (3) verschiedener Teilplatten (5) an jeweiligen Positionen benachbart zueinander mittels des Anordnungsschritts f) und des Verbindungsschritts g), um eine Trennwand (17) des Strukturbauteils (1) zu definieren, die durch den Satz von Rippen (3) gebildet wird,
wobei das Strukturbauteil (1) durch einen Tank mit mindestens zwei Innenvolumina (V1, V2 ) definiert ist, die durch die Trennwand (17) getrennt sind.

10. Verfahren nach einem der vorangehenden Ansprüche, wobei Schritt a) zum Laminieren erster Schichten (7) mittels einer Laminiervorrichtung ausgeführt wird,
und wobei das Verfahren ferner den Schritt aufweist:
m) Bewegen des Formwerkzeugs (8) in Richtung zur Laminiervorrichtung um einen Versatz, der der Dicke des Satzes zweiter Schichten (10) entspricht, die die Überhaut (13) bilden.

11. Verfahren nach einem der vorangehenden Ansprüche, wobei jeder Stringer (2) definiert ist durch:
einen Holm; oder
eine mehrschichtige Versteifungsplatte, die einen inneren Strukturkern aufweist, der durch einen Polymerschaum oder eine Wabenstruktur definiert ist und zwischen zwei Schichten oder Platten des Verbundmaterials sandwichartig angeordnet ist.

12. Strukturbauteil (1) aus Verbundmaterial und aufweisend:
eine Haut (4), die aus einer Vielzahl von Schichten (7, 10) aus Verbundmaterial gebildet ist;
eine Vielzahl von Versteifungsstringern (2) aus Verbundmaterial, die an der Haut (4) fixiert und im Wesentlichen parallel zur Längsrichtung des Bauteils (1) ausgerichtet sind; und
eine Vielzahl von Versteifungsrippen (3) aus Verbundmaterial, die an der Haut (4) fixiert und quer zur Längsrichtung des Bauteils (1) ausgerichtet sind,
wobei das Bauteil (1) eine Vielzahl von Teilplatten (5) aufweist, die miteinander verbunden sind und jeweils eine Teilhaut (6) aufweisen, die durch erste Schichten (7) der Vielzahl von Schichten aus Verbundmaterial und mindestens einem Stringer (2) sowie mindestens eine Rippe (3) definiert ist, die an einer Innenfläche (6a) der Teilhaut (6) fixiert sind,
wobei jede Teilhaut (6) eine der Innenfläche (6a) gegenüberliegende Außenfläche (6b) aufweist,
wobei das Bauteil (1) eine durchgehende Teilwand (12a) aufweist, die durch Vereinigen der Außenflächen (6b) der Teilhäute (6) der miteinander verbundenen Teilplatten (5) gebildet wird,
wobei zweite Schichten (10) der Vielzahl von Schichten aus Verbundmaterial auf die ersten Schichten (7) laminiert sind, um eine durchgehende äußere Überschicht (13) zu definieren, die auf der Teilwand (12a) aufgebracht ist, und
wobei die Haut (4) durch den Satz der Teilhäute (6) und die Überhaut (13) definiert ist und aus den ersten Schichten (7) und den zweiten Schichten (10) besteht.

13. Strukturbauteil nach Anspruch 12, wobei:
die zweiten Schichten (10) durch eine Endlosfaser (14) aus Verbundmaterial gebildet werden, die auf die Teilwand (12a) auflaminiert ist, und/oder
die ersten Schichten (7) maximal zwei, vorzugsweise zwei Schichten aus Verbundmaterial aufweisen, und/oder
jede der ersten Schichten (7) eine Schicht aus Faserverbundmaterial aufweist, wobei die Fasern aller ersten Schichten sich parallel zu einer gemeinsamen Richtung erstrecken, vorzugsweise zur Längsrichtung des Bauteils.

14. Bauteil nach Anspruch 12 oder 13, wobei jeder Stringer (2) definiert ist durch:
einen Holm; oder
eine mehrschichtige Versteifungsplatte, die einen inneren Strukturkern aufweist, der durch einen Polymerschaum oder eine Wabenstruktur definiert ist und zwischen zwei Schichten oder Platten des Verbundmaterials sandwichartig angeordnet ist.

## Revendications

1. Méthode de fabrication d'un composant structurel (1) en matériau composite comprenant un revêtement (4) formé par une pluralité de couches (7, 10) de matériau composite et renforcé par des lisses de raidissement (2) et des nervures (3) fixées audit revêtement (4), la méthode incluant les étapes suivantes :
a) la stratification de premières couches (7) de matériau composite non durci sur un outil de formage (8) formant ainsi un sous-revêtement (6) présentant une première surface (6b) en contact avec l'outil de formage (8) et une seconde surface (6a) opposée à la première surface (6b) ;
b) l'agencement d'au moins une lisse de raidissement (2) en matériau composite pré-durci sur la seconde surface (6a) du sous-revêtement (6), selon une direction sensiblement parallèle à une direction longitudinale du composant structurel (1) ;
c) l'agencement d'au moins une nervure de raidissement (3) en matériau composite pré-durci sur la seconde surface (6a) du sous-revêtement (6), selon une direction transversale qui est transversale à la direction longitudinale du composant structurel (1) ;
d) l'application d'une température et d'une pression préréglées à l'ensemble défini par le sous-revêtement (6), par l'au moins une lisse (2) et par l'au moins une nervure (3), afin de durcir le matériau composite et de déterminer la fixation rigide et intégrale de la lisse (2) et de la nervure (3) à la seconde surface (6a) du sous-revêtement (6), obtenant ainsi un sous-panneau (5) en matériau composite durci ;
e) la répétition des étapes a) à d) pour obtenir une pluralité de sous-panneaux (5) ;
f) l'agencement des sous-panneaux obtenus (5) sur un support central (11), de manière à entourer au moins partiellement le support central (11) et de sorte que la seconde surface (6a) de chaque sous-revêtement (6) soit orientée vers le support central (11) et que la première surface (6b) de chaque sous-revêtement (6) soit orientée vers l'extérieur ;
g) l'assemblage par paires de sous-panneaux (5) adjacents latéralement au niveau des sous-revêtements (6) respectifs, de manière à définir un pré-composant (12) présentant une surface externe continue (12a) définie par l'ensemble des premières surfaces (6b) des sous-revêtements (6) des sous-panneaux (5) assemblés ;
h) la stratification de secondes couches (10) de matériau composite non durci sur la surface externe (12a) du pré-composant (12), de manière à définir un sur-revêtement externe continu (13) sur le pré-composant (12), et de manière à définir ledit revêtement (4), ledit revêtement (4) étant constitué desdites premières couches (7) et desdites secondes couches (10) ; et
i) l'application d'une température et d'une pression préréglées à l'ensemble comprenant le pré-composant (12) et le sur-revêtement externe continu (13), afin de durcir le matériau composite et de déterminer la fixation rigide et intégrale des secondes couches (10) aux premières couches (7).

2. Méthode selon la revendication 1, dans laquelle l'étape h) de stratification de secondes couches comprend :
- l'application d'une fibre continue (14) de matériau composite sur ladite surface externe (12a) du pré-composant (12) ; et
- la superposition de ladite fibre continue (14) sur ladite surface externe (12a) du pré-composant (12).

3. Méthode selon la revendication 1 ou 2, dans laquelle l'étape a) de stratification des premières couches comprend la stratification d'au plus deux couches (7) de matériau composite non durci, et comprend de préférence la stratification de deux couches (7) de matériau composite non durci.

4. Méthode selon l'une quelconque des revendications précédentes, dans laquelle l'étape a) de stratification des premières couches comprend :
- la stratification de couches (7) de matériau composite à fibres ;
- l'agencement des premières couches (7) de manière à ce que les fibres de toutes les premières couches soient parallèles à une direction commune, de préférence la direction longitudinale du composant structurel (1).

5. Méthode selon l'une quelconque des revendications précédentes, dans laquelle l'étape a) de stratification des premières couches comprend la formation de bords latéraux (15, 16) sur ledit sous-revêtement (6) ;
et dans laquelle l'étape g) d'assemblage comprend le chevauchement d'un bord latéral (16) d'un premier sous-panneau (5) avec un bord latéral (15) d'un second sous-panneau (5) adjacent au premier sous-panneau (5).

6. Méthode selon la revendication 5, dans laquelle l'étape a) de stratification des premières couches inclut le façonnage, sur un premier desdits bords latéraux (15, 16), d'une partie réceptrice (15) et le façonnage, sur un second desdits bords latéraux (15, 16), d'une partie d'accouplement (16) ;
et dans laquelle l'étape g) d'assemblage inclut :
- l'engagement de la partie réceptrice (15) d'un premier sous-panneau (5) avec la partie d'accouplement (16) d'un second sous-panneau (5) adjacent au premier sous-panneau (5) ;
- la fixation de la partie réceptrice (15) et la partie d'accouplement (16) l'une à l'autre.

7. Méthode selon la revendication 6, dans laquelle l'étape g) d'assemblage inclut en outre la fixation de la partie réceptrice (15) et de la partie d'accouplement (16) l'une à l'autre en intercalant une couche adhésive entre elles.

8. Méthode selon l'une quelconque des revendications précédentes, dans laquelle l'étape d) d'application de la température et de la pression comprend :
- l'agencement de l'ensemble défini par le sous-revêtement (6), par l'au moins une lisse (2) et par l'au moins une nervure (3) dans un sac à vide (51) ;
- l'application du vide à l'intérieur du sac à vide (51) ;
et/ou dans laquelle l'étape i) d'application de température et de pression inclut :
- l'agencement de l'ensemble incluant le pré-composant (12) et la sur-revêtement externe continue (13) dans un sac à vide (52) ;
- l'application du vide à l'intérieur du sac à vide (52).

9. Méthode selon l'une quelconque des revendications précédentes, et comprenant en outre l'étape de :
1) l'agencement des nervures (3) de différents sous-panneaux (5) dans leurs positions respectives adjacentes les unes aux autres au moyen des étapes f) d'agencement et g) d'assemblage, afin de définir une cloison (17) du composant structurel (1) formée par l'ensemble de nervures (3) ;
dans laquelle le composant structurel (1) est défini par une cuve comportant au moins deux volumes internes (V1, V2) séparés par ladite cloison (17).

10. Méthode selon l'une quelconque des revendications précédentes, dans laquelle l'étape a) de stratification des premières couches (7) est réalisée au moyen d'un dispositif de stratification ;
et dans laquelle la méthode comprend en outre l'étape suivante :
m) le déplacement de l'outil de formage (8) vers le dispositif de stratification d'un décalage égal à l'épaisseur de l'ensemble de secondes couches (10) constituant la sur-revêtement (13).

11. Méthode selon l'une quelconque des revendications précédentes, dans laquelle chaque lisse (2) est définie par :
- un longeron ; ou
- un panneau de raidissement multicouche comprenant un noyau structurel interne, défini par une mousse polymère ou une structure alvéolée, intercalé entre deux couches ou feuilles dudit matériau composite.

12. Composant structurel (1) en matériau composite et comprenant :
- un revêtement (4) formé par une pluralité de couches (7, 10) de matériau composite ;
- une pluralité de lisses de raidissement (2) en matériau composite, fixées au revêtement (4) et orientées sensiblement parallèlement à une direction longitudinale du composant structurel (1) ; et
- une pluralité de nervures de raidissement (3) en matériau composite, fixées au revêtement (4) et orientées transversalement à la direction longitudinale du composant structurel (1) ;
le composant structurel (1) présentant une pluralité de sous-panneaux (5) assemblés les uns aux autres et comprenant, chacun, un sous-revêtement (6) défini par des premières couches (7) de ladite pluralité de couches de matériau composite et au moins une lisse (2) et au moins une nervure (3) qui sont fixées à une surface interne (6a) du sous-revêtement (6) ;
dans lequel chaque sous-revêtement (6) présente une surface externe (6b) opposée à ladite surface interne (6a) ;
dans lequel le composant structurel (1) comprend une sous-paroi continue (12a) définie par l'union des surfaces externes (6b) des sous-revêtements (6) des sous-panneaux (5) assemblés les uns aux autres ;
dans lequel des secondes couches (10) de ladite pluralité de couches de matériau composite sont stratifiées sur les premières couches (7) de manière à définir un sur-revêtement externe continu (13) superposé sur ladite sous-paroi (12a) ;
et dans lequel le revêtement (4) est défini par l'ensemble dudit sous-revêtement (6) et dudit sur-revêtement (13), et se compose des premières couches (7) et des secondes couches (10).

13. Composant structurel selon la revendication 12, dans lequel :
- les secondes couches (10) sont définies par une fibre continue (14) de matériau composite stratifiée et superposée sur ladite sous-paroi (12a) ; et/ou
- les premières couches (7) comprennent au maximum deux, de préférence deux, couches de matériau composite ; et/ou
- chacune des premières couches (7) comprend une couche de matériau composite à fibres, les fibres de toutes les premières couches étant parallèles à une direction commune, de préférence la direction longitudinale du composant structurel (1).

14. Composant structurel selon la revendication 12 ou 13, dans lequel chaque lisse (2) est définie par :
- un longeron ; ou
- un panneau de raidissement multicouche comprenant un noyau structurel interne, défini par une mousse polymère ou une structure alvéolée, intercalé entre deux couches ou feuilles dudit matériau composite.
